# EUROPEAN PATENT SPECIFICATION

(11) **EP 4 393 680 B1**
(45) Date of publication and mention of the grant of the patent: **13.08.2025**
(21) Application number: 23866614.3
(22) Date of filing: 20.02.2023
(51) Int. Cl.: B29C 64/171, B29C 64/20, B29C 64/227, B29C 64/295, B29C 64/30, B29C 64/314, B29C 64/321, B33Y 10/00, B33Y 40/00, B33Y 40/10, B29C 70/50, B29D 99/00, B33Y 30/00

(54) **TRUSS ADDITIVE MANUFACTURING DEVICE FOR AEROSPACE**
VORRICHTUNG ZUR GENERATIVEN FERTIGUNG VON TRÄGERN FÜR DIE LUFT- UND RAUMFAHRT
DISPOSITIF DE FABRICATION ADDITIVE DE TREILLIS POUR L'AÉROSPATIALE

(30) Priority: 28.10.2022 CN 202211334837
(43) Date of publication of application: 03.07.2024
(73) Proprietor: Nanjing University of Aeronautics and Astronautics, Nanjing, Jiangsu 210016 (CN)
(72) Inventor: FAN, Congze, Jiangsu 210016 (CN); SHAN, Zhongde, Jiangsu 210016 (CN); LIU, Kai, Jiangsu 210016 (CN); CHEN, Yiwei, Jiangsu 210016 (CN); ZHENG, Jinghua, Jiangsu 210016 (CN); SONG, Wenzhe, Jiangsu 210016 (CN)
(74) Representative: Proi World Intellectual Property GmbH
(86) International application number: PCT/CN2023/077080
(87) International publication number: WO 2024/087420

(56) References cited:
- WO-A2-02/10535
- CN-A- 113 263 723
- US-A1- 2018 250 850
- US-A1- 2021 122 111
- US-A1- 2021 349 441
- US-A1- 2022 048 227

## Description

### TECHNICAL FIELD

The present invention relates to the field of additive manufacturing devices, and in particular, to an additive manufacturing device for an aerospace truss.

### BACKGROUND

At present, composite trusses are mostly manufactured by machining truss components with molds and then bonding the truss components, so the process is cumbersome and a truss structure cannot be formed once. Truss structures formed by layering require manual preparation, with long processing cycle, poor product consistency, and inconsistent resin and fiber statuses inside trusses.

At present, technologies for forming trusses by additive manufacturing are still being developed, relevant devices are not yet mature, and there is no additive manufacturing device for an aerospace truss. The manufacturing device proposed in the present invention achieves rapid in-situ formation of composite trusses, with good forming effect and high efficiency.

US 2022/048227 A1 discloses an additive manufacturing device for an aerospace truss, comprising a raw material input unit, a longitudinal beam forming unit, a longitudinal beam traction unit, a cross beam forming unit and a truss support unit arranged sequentially, wherein the longitudinal beam forming unit comprises three mold sets where each mold set comprises several molds.

### SUMMARY

To solve the above problems, the present invention discloses an additive manufacturing device for an aerospace truss, which can efficiently complete the formation of space trusses for satellite use.

An additive manufacturing device for an aerospace truss includes a raw material input unit, a longitudinal beam forming unit, a longitudinal beam traction unit, a cross beam forming unit and a truss support unit arranged sequentially.

The raw material input unit includes an upper roller, a lower roller located below the upper roller, several conveying pressure rollers arranged sequentially from top to bottom, and a guide plate, where one end of the conveying pressure roller is connected to a feeding stepper motor.

The upper roller stores tapes for forming longitudinal beams; and the lower roller stores wires for printing a cross beam. A feeding portion is composed of a feeding stepper motor and conveying pressure rollers, where the feeding stepper motor drives the conveying pressure rollers to convey raw materials. A guide plate portion is composed of a plurality of rollers, and adjusts the direction and position of the used tapes to prepare for forming.

The longitudinal beam forming unit includes three mold sets, which are arranged in a triangle; each mold set includes several molds, heating rods, a ceramic tube and a support plate, and is connected to the support plate through the ceramic tube; the heating rods are mounted in holes of the molds; each mold has an upper mold structure and a lower mold structure, which form a channel with a V-shaped angle; the V-shaped angle in each mold set gradually decreases from front to back; the three mold sets are arranged in a triangle and connected to the support plates through the ceramic tubes; and the pre-impregnated tapes passing through the molds form the required longitudinal beams by controlling the temperature of the molds.

The longitudinal beam traction unit includes a traction stepper motor, a coupling, a transmission shaft and an upper support frame; wing plates are distributed on two sides of the upper support frame; an angle between each wing plate and a middle plate of the upper support frame is 60°, and each wing plate has two through holes for fixing an upper power output shaft and an upper driven shaft that are arranged in parallel; the other end of the left upper power output shaft is arranged on a left support plate and connected to a bevel gear I; the other end of the right upper power output shaft is arranged on a right support plate and connected to a bevel gear II; a gear I and a concave wheel I are sequentially arranged on each upper power output shaft; a gear II and a convex wheel I that cooperate with the gear I and the concave wheel I are sequentially arranged on the upper driven shaft; the stepper motor is connected to the transmission shaft through the coupling; the transmission shaft is sequentially mounted on the left support plate and the right support plate; a bevel gear III and a bevel gear that mesh with the bevel gear I and the bevel gear II separately are sequentially arranged on the transmission shaft; a lower driven shaft parallel to the transmission shaft is mounted on the left support plate; a gear III and a convex wheel II are sequentially arranged on the lower driven shaft; the gear III and the convex wheel II cooperate with a gear IV and a concave wheel II on the transmission shaft separately; and a center line of the convex wheel II is coaxial with a center of the middle plate of the upper support frame.

The traction stepper motor drives the transmission shaft through the coupling, so as to drive meshing between the bevel gears and the gears, enable the convex and concave rollers to move simultaneously and pull the printed truss longitudinal beams.

The cross beam forming unit is composed of a motion module and a printing module; the truss support unit is composed of support conveying rollers and a support frame; a support conveying roller is arranged at each end of the support frame; and a shape of the support conveying rollers matches an inner surface of the truss longitudinal beam.

Further improvement of the present invention: the printing module is arranged on a slider of the motion module; the motion module is a screw linear guide mechanism; and the printing module includes a printing assembly and a nozzle arranged on the printing assembly.

When the longitudinal beams are formed, the motion module moves simultaneously, and the printing module on the motion module begins to work to print a cross beam between the two longitudinal beams.

Further improvement of the present invention: three cross beam forming units are configured; and the three cross beam forming units are parallel to three sides of the truss and perpendicular to the longitudinal beams of the truss.

Further improvement of the present invention: a gap between the concave wheel I and the convex wheel I is 0.2 mm to 3 mm; and a gap between the concave wheel II and the convex wheel II is 0.2 mm to 3 mm.

Further improvement of the present invention: each mold set includes three molds; and the V-shaped angles in the mold sets are 120°, 90°, and 60°, respectively.

Every two molds in each mold set are spaced by 20 mm to 40 mm. The mold has an upper mold structure and a lower mold structure in a V shape, and angles between flow channels of the molds are different, so that the 180° pre-impregnated tapes gradually transform into longitudinal beams with an angle of 60°. Taking each set of three molds as an example, the angles between the three molds are sequentially 120°, 90°, and 60° in the movement direction of the pre-impregnated tapes. A heating rod and a temperature sensor are mounted on the upper mold of each mold, and the upper and lower molds are connected by bolts.

Further improvement of the present invention: the concave wheel I and the concave wheel II are recessed in a 60° V shape; the convex wheel I and the convex wheel II are raised in a 60° V shape; and the shapes match the structural shape of the truss.

Further improvement of the present invention: rubber layers are arranged on surfaces of the concave wheel I and the concave wheel II, and rubber layers are arranged on surfaces of the convex wheel I and the convex wheel, to protect printed materials.

Further improvement of the present invention: the upper support frame, the left support frame and the right support frame are all made of carbon fiber boards.

Further improvement of the present invention: the coupling is an elastic coupling, which improves operational stability.

Beneficial effects of the present invention are as follows: rapid in-situ formation of composite trusses is achieved, with good forming effect and high efficiency; and the stability is improved.

### BRIEF DESCRIPTION OF THE DRAWINGS

FIG. 1 is a schematic diagram of an overall design scheme of a device;
FIG. 2 is a schematic diagram of a raw material input unit;
FIG. 3 is a cross-sectional view of a longitudinal beam forming unit mold;
FIG. 4 is a schematic diagram of a longitudinal beam traction unit;

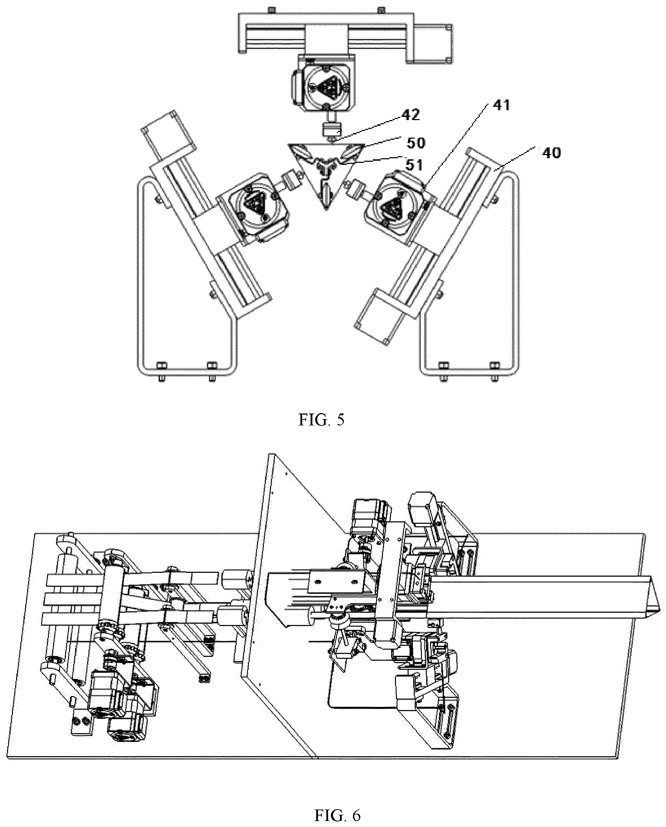

FIG. 5 is a schematic diagram of a cross beam printing and truss support unit; and
FIG. 6 is a schematic diagram of an overall structure.

### DETAILED DESCRIPTION OF THE EMBODIMENTS

The present invention will be further illustrated below in conjunction with the accompanying drawings and specific embodiments. It should be understood that the following specific embodiments are only used for describing the present invention, rather than limiting the scope of the present invention. It should be noted that the terms "front", "back", "left", "right", "upper" and "lower" used in the following description refer to directions in the drawings, and the terms "inside" and "outside" refer to a direction toward or away from a geometric center of a specific component separately.

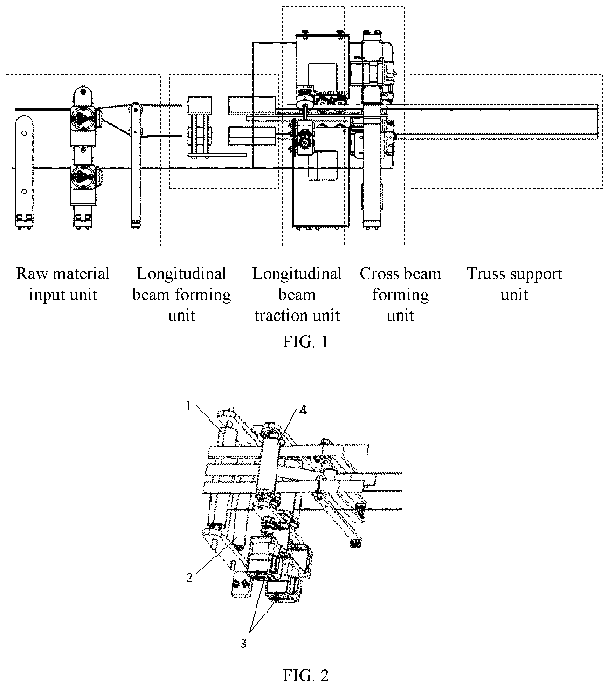

As shown in FIG. 1, an additive manufacturing device for an aerospace truss includes a raw material input unit, a longitudinal beam forming unit, a longitudinal beam traction unit, a cross beam forming unit and a truss support unit arranged sequentially.

As shown in FIG. 2, the raw material input unit includes an upper roller 1, a lower roller 2 located below the upper roller 1, several conveying pressure rollers 4 arranged sequentially from top to bottom, and a guide plate. One end of the conveying pressure roller 4 is connected to a feeding stepper motor.

A storage portion of the raw material input unit is composed of brackets and rollers, two longitudinal brackets are fixed on a plane, two transverse brackets are vertically distributed in parallel and equidistantly on the longitudinal brackets, and two rollers are sheathed on the two longitudinal brackets separately. Three groove-like structures are equidistantly arranged in the two rollers in a rotation direction, upper roller grooves store pre-impregnated tapes in three directions separately, and lower roller grooves store pre-impregnated wires in three directions separately; and a feeding portion is composed of a motor, pressure rollers and brackets, where the brackets are similar to those in the storage portion, four transverse brackets are sheathed with four rollers, every rollers constitute a group and are distributed up and down, the lower roller of each group is a driving wheel, the stepper motor is connected through a coupling to achieve power input, the upper roller is a driven wheel, and the two rollers roll and transport raw materials. A meshing position of each group of rollers in the storage portion is on the same height as upper surfaces of the rollers in the storage portion. A guide portion is composed of small rollers and brackets, each small roller is on the same straight line as the storage roller groove, and the height of each small roller is determined by the longitudinal beam forming unit.

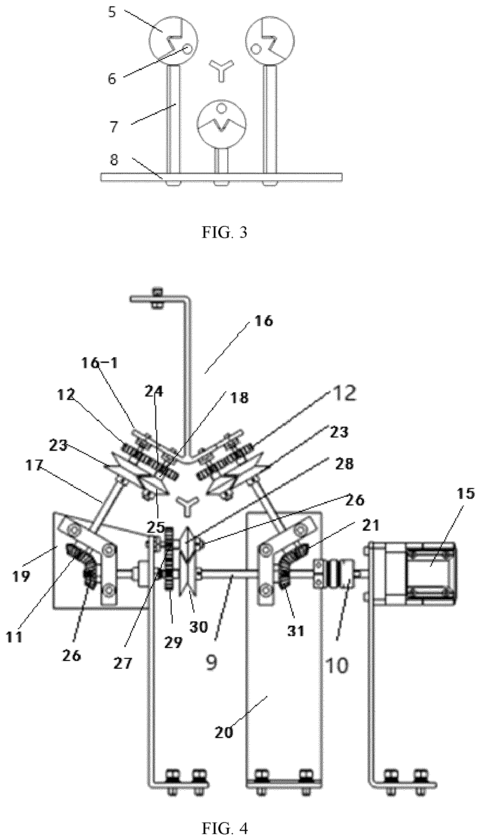

As shown in FIG. 3, the longitudinal beam forming unit includes three mold sets, which are arranged in a triangle; each mold set includes several molds 5, heating rods 6, a ceramic tube 7 and a support plate 8, and is connected to the support plate 8 through the ceramic tube 7; the heating rods 6 are mounted in holes of the molds 5; each mold 5 has an upper mold structure and a lower mold structure, which form a V-shaped angle; the V-shaped angle in each mold set gradually decreases from front to back; a gap between a concave wheel I 23 and a convex wheel I 25 is 0.2 mm to 3 mm; and a gap between a concave wheel II 30 and a convex wheel II 28 is 0.2 mm to 3 mm. Each mold set includes three molds 5; the V-shaped angles in the mold sets are 120°, 90°, and 60°, respectively; the concave wheel I 23 and the concave wheel II 30 are recessed in a 60° V shape; and the convex wheel I 25 and the convex wheel II 28 are raised in a 60° V shape.

Angles between flow channels of the molds are different, so that the 180° pre-impregnated tapes passing through the molds gradually transform into required longitudinal beams with an angle of 60°.

As shown in FIG. 4, the longitudinal beam traction unit includes a traction stepper motor 15, a coupling 10, a transmission shaft 9 and an upper support frame 16; wing plates 16-1 are distributed on two sides of the upper support frame 16; an angle between each wing plate 16-1 and a middle plate of the upper support frame 16 is 60°, and each wing plate 16-1 has two through holes for fixing an upper power output shaft 17 and an upper driven shaft 18 that are arranged in parallel; the other end of the left upper power output shaft 17 is arranged on a left support plate 19 and connected to a bevel gear I 11; the other end of the right upper power output shaft 17 is arranged on a right support plate 20 and connected to a bevel gear II 21; a gear I 12 and the concave wheel I 23 are sequentially arranged on each upper power output shaft 17; a gear II 24 and the convex wheel I 25 that cooperate with the gear I 12 and the concave wheel I 23 are sequentially arranged on the upper driven shaft 18; the stepper motor 15 is connected to the transmission shaft 9 through the coupling 10; the transmission shaft 9 is sequentially mounted on the left support plate 19 and the right support plate 20; a bevel gear III 26 and a bevel gear 31 that mesh with the bevel gear I 11 and the bevel gear II 21 separately are sequentially arranged on the transmission shaft 9; a lower driven shaft 26 parallel to the transmission shaft 9 is mounted on the left support plate 19; a gear III 27 and the convex wheel II 28 are sequentially arranged on the lower driven shaft 26; the gear III 27 and the convex wheel II 28 cooperate with a gear IV 29 and a concave wheel II 30 on the transmission shaft 9 separately; and a center line of the convex wheel II 28 is coaxial with a center of the middle plate of the upper support frame 16.

The stepper motor in the longitudinal beam traction unit is connected to one of the transmission shafts through the coupling, and the transmission shafts are driven by the bevel gears, so that the stepper motor drives the driven shafts to move. Spur gears on the transmission shafts drive the gears on the driven shafts, so that convex and concave rollers move simultaneously to pull printed truss longitudinal beams.

The cross beam forming unit is composed of a motion module and a printing module; the truss support unit is composed of support conveying rollers 50 and a support frame 51; a support conveying roller 50 is arranged at each end of the support frame 51; and a shape of the support conveying rollers 50 matches an inner surface of the truss longitudinal beam. The printing module is arranged on a slider of the motion module 40; the motion module 40 is a screw linear guide mechanism; and the printing module includes a printing assembly 41 and a nozzle 42 arranged on the printing assembly 41.

The motion module of the cross beam forming unit is fixed to the device through a bracket, and is parallel to three sides of the truss. When the longitudinal beams are formed, the motion module moves simultaneously, and the printing module on the motion module works to print a cross beam between the two longitudinal beams.

## Claims

1. An additive manufacturing device for an aerospace truss, comprising a raw material input unit, a longitudinal beam forming unit, a longitudinal beam traction unit, a cross beam forming unit and a truss support unit arranged sequentially, wherein
the raw material input unit comprises an upper roller (1), a lower roller (2) located below the upper roller (1), several conveying pressure rollers (4) arranged sequentially from top to bottom, and a guide plate; one end of each of the several conveying pressure rollers (4) is connected to a feeding stepper motor;
the longitudinal beam forming unit comprises three mold sets, which are arranged in a triangle; each mold set comprises several molds (5), heating rods (6), a ceramic tube (7) and a support plate (8), and is connected to the support plate (8) through the ceramic tube (7); the heating rods (6) are mounted in holes of the molds (5); each mold (5) has an upper mold structure and a lower mold structure, which form a V-shaped angle; the V-shaped angle in each mold set gradually decreases from front to back; and
the longitudinal beam traction unit comprises a traction stepper motor (15), a coupling (10), a transmission shaft (9) and an upper support frame (16); wing plates (16-1) are distributed on two sides of the upper support frame (16); an angle between each wing plate (16-1) and a middle plate of the upper support frame (16) is 60°, and each wing plate (16-1) has two through holes for fixing a left and right upper power output shaft (17) and an upper driven shaft (18) that are arranged in parallel; an end of the left upper power output shaft (17) is arranged on a left support plate (19) and connected to a bevel gear I (11); an end of the right upper power output shaft (17) is arranged on a right support plate (20) and connected to a bevel gear II (21); a gear I (12) and a concave wheel I (23) are sequentially arranged on each upper power output shaft (17); a gear II (24) and a convex wheel I (25) that cooperate with the gear I (12) and the concave wheel I (23) are sequentially arranged on the upper driven shaft (18); the stepper motor (15) is connected to the transmission shaft (9) through the coupling (10); the transmission shaft (9) is sequentially mounted on the left support plate (19) and the right support plate (20); a bevel gear III (26) and a fourth bevel gear (31) that mesh with the bevel gear I (11) and the bevel gear II (21) separately are sequentially arranged on the transmission shaft (9); a lower driven shaft (26) parallel to the transmission shaft (9) is mounted on the left support plate (19); a gear III (27) and a convex wheel II (28) are sequentially arranged on the lower driven shaft (26); the gear III (27) and the convex wheel II (28) cooperate with a gear IV (29) and a concave wheel II (30) on the transmission shaft (9) separately; a center line of the convex wheel II (28) is coaxial with a center of the middle plate of the upper support frame (16); the cross beam forming unit is composed of a motion module and a printing module; the truss support unit is composed of support conveying rollers (50) and a support frame (51) with two ends; a support conveying roller (50) is arranged at each end of the support frame (51) with two ends; and a shape of the support conveying rollers (50) matches an inner surface of a truss longitudinal beam.

2. The additive manufacturing device for an aerospace truss according to claim 1, wherein the printing module is arranged on a slider of the motion module (40); the motion module (40) is a screw linear guide mechanism; and the printing module comprises a printing assembly (41) and a nozzle (42) arranged on the printing assembly (41).

3. The additive manufacturing device for an aerospace truss according to claim 1, wherein three cross beam forming units are configured; and the three cross beam forming units are parallel to three sides of the truss and perpendicular to the longitudinal beams of the truss.

4. The additive manufacturing device for an aerospace truss according to claim 1, wherein
a gap between the concave wheel I (23) and the convex wheel I (25) is 0.2 mm to 3 mm; and a gap between the concave wheel II (30) and the convex wheel II (28) is 0.2 mm to 3 mm.

5. The additive manufacturing device for an aerospace truss according to claim 1, wherein
each mold set comprises three molds (5); and the V-shaped angles in the mold sets are 120°, 90°, and 60°, respectively.

6. The additive manufacturing device for an aerospace truss according to claim 1, wherein
the concave wheel I (23) and the concave wheel II (30) are recessed in a 60° V shape; and the convex wheel I (25) and the convex wheel II (28) are raised in a 60° V shape.

7. The additive manufacturing device for an aerospace truss according to claim 1, wherein
rubber layers are arranged on surfaces of the concave wheel I (23) and the concave wheel II (30); and rubber layers are arranged on surfaces of the convex wheel I (25) and the convex wheel II (28).

8. The additive manufacturing device for an aerospace truss according to claim 1, further comprising a left support frame and a right support frame, wherein the upper support frame, the left support frame and the right support frame are all made of carbon fiber boards.

9. The additive manufacturing device for an aerospace truss according to claim 1, wherein the coupling (9) is an elastic coupling.

## Patentansprüche

1. Vorrichtung zur additiven Herstellung eines Fachwerkträgers für die Luft- und Raumfahrt, mit einer Rohmaterialeingabeeinheit, einer Längsträgerformeinheit, einer Längsträgerzugeinheit, einer Querträgerformeinheit und einer Fachwerkträgerstützeinheit, die hintereinander angeordnet sind, wobei
die Rohmaterialeingabeeinheit eine obere Walze (1), eine untere Walze (2), die sich unterhalb der oberen Walze (1) befindet, mehrere Förderdruckwalzen (4), die aufeinanderfolgend von oben nach unten angeordnet sind, und eine Führungsplatte umfasst; ein Ende jeder der mehreren Förderdruckwalzen (4) mit einem Vorschubschrittmotor verbunden ist;
die Längsträgerformeinheit drei Formsätze umfasst, die in einem Dreieck angeordnet sind; jeder Formsatz mehrere Formen (5), Heizstäbe (6), ein Keramikrohr (7) und eine Trägerplatte (8) umfasst und mit der Trägerplatte (8) durch das Keramikrohr (7) verbunden ist; die Heizstäbe (6) in Löchern der Formen (5) angebracht sind; jede Form (5) eine obere Formstruktur und eine untere Formstruktur aufweist, die einen V-förmigen Winkel bilden; der V-förmige Winkel in jedem Formsatz von vorne nach hinten allmählich abnimmt; und
die Längsträger-Traktionseinheit einen Traktionsschrittmotor (15), eine Kupplung (10), eine Übertragungswelle (9) und einen oberen Tragrahmen (16) umfasst; Flügelplatten (16-1) auf zwei Seiten des oberen Tragrahmens (16) verteilt sind; ein Winkel zwischen jeder Flügelplatte (16-1) und einer mittleren Platte des oberen Tragrahmens (16) 60° beträgt und jede Flügelplatte (16-1) zwei Durchgangslöcher zur Befestigung einer linken und rechten oberen Leistungsabgabewelle (17) und einer oberen angetriebenen Welle (18) aufweist, die parallel angeordnet sind; ein Ende der linken oberen Abtriebswelle (17) auf einer linken Trägerplatte (19) angeordnet und mit einem Kegelrad I (11) verbunden ist; ein Ende der rechten oberen Abtriebswelle (17) auf einer rechten Trägerplatte (20) angeordnet und mit einem Kegelrad II (21) verbunden ist; auf jeder oberen Leistungsabgabewelle (17) sind nacheinander ein Zahnrad I (12) und ein Hohlrad I (23) angeordnet; auf der oberen Abtriebswelle (18) sind nacheinander ein Zahnrad II (24) und ein konvexes Rad I (25) angeordnet, die mit dem Zahnrad I (12) und dem Hohlrad I (23) zusammenwirken; der Schrittmotor (15) ist über die Kupplung (10) mit der Übertragungswelle (9) verbunden; die Getriebewelle (9) ist nacheinander auf der linken Trägerplatte (19) und der rechten Trägerplatte (20) montiert; auf der Getriebewelle (9) sind nacheinander ein Kegelrad III (26) und ein viertes Kegelrad (31) angeordnet, die getrennt mit dem Kegelrad I (11) und dem Kegelrad II (21) kämmen; eine untere angetriebene Welle (26), die parallel zur Getriebewelle (9) ist, ist auf der linken Stützplatte (19) montiert; ein Zahnrad III (27) und ein konvexes Rad II (28) sind der Reihe nach auf der unteren angetriebenen Welle (26) angeordnet; das Zahnrad III (27) und das konvexe Rad II (28) arbeiten mit einem Zahnrad IV (29) und einem konkaven Rad II (30) auf der Getriebewelle (9) getrennt zusammen; eine Mittellinie des konvexen Rades II (28) ist koaxial mit einer Mitte der mittleren Platte des oberen Tragrahmens (16); die Traversenbildungseinheit besteht aus einem Bewegungsmodul und einem Druckmodul; die Traversenstützeinheit besteht aus Stützförderrollen (50) und einem Tragrahmen (51) mit zwei Enden; eine Stützförderrolle (50) ist an jedem Ende des Tragrahmens (51) mit zwei Enden angeordnet; und eine Form der Stützförderrollen (50) passt zu einer Innenfläche eines Traversenlängsträgers.

2. Vorrichtung zur additiven Fertigung eines Fachwerkträgers für die Luft- und Raumfahrt nach Anspruch 1, wobei das Druckmodul auf einem Schlitten des Bewegungsmoduls (40) angeordnet ist; das Bewegungsmodul (40) ein Schrauben-Linearführungsmechanismus ist; und das Druckmodul eine Druckbaugruppe (41) und eine auf der Druckbaugruppe (41) angeordnete Düse (42) umfasst.

3. Additive Fertigungsvorrichtung für ein Luft- und Raumfahrtfachwerk nach Anspruch 1, wobei drei Querträgerformungseinheiten konfiguriert sind; und die drei Querträgerformungseinheiten parallel zu drei Seiten des Fachwerks und senkrecht zu den Längsträgern des Fachwerks sind.

4. Additive Fertigungsvorrichtung für ein Luft- und Raumfahrtfachwerk nach Anspruch 1, wobei
ein Spalt zwischen dem konkaven Rad I (23) und dem konvexen Rad I (25) 0,2 mm bis 3 mm beträgt; und ein Spalt zwischen dem konkaven Rad II (30) und dem konvexen Rad II (28) 0,2 mm bis 3 mm beträgt.

5. Additive Fertigungsvorrichtung für ein Luft- und Raumfahrttragwerk nach Anspruch 1, wobei
jeder Formsatz drei Formen (5) umfasst; und die V-förmigen Winkel in den Formsätzen 120°, 90° bzw. 60° betragen.

6. Additive Fertigungsvorrichtung für ein Luft- und Raumfahrttragwerk nach Anspruch 1, wobei
das konkave Rad I (23) und das konkave Rad II (30) in einer 60°-V-Form vertieft sind; und das konvexe Rad I (25) und das konvexe Rad II (28) in einer 60°-V-Form erhöht sind.

7. Additive Fertigungsvorrichtung für ein Luft- und Raumfahrttragwerk nach Anspruch 1, wobei
Gummischichten auf Oberflächen des konkaven Rades I (23) und des konkaven Rades II (30) angeordnet sind; und Gummischichten auf Oberflächen des konvexen Rades I (25) und des konvexen Rades II (28) angeordnet sind.

8. Additiv hergestellte Vorrichtung für eine Luft- und Raumfahrttraverse nach Anspruch 1, die ferner einen linken Stützrahmen und einen rechten Stützrahmen umfasst, wobei der obere Stützrahmen, der linke Stützrahmen und der rechte Stützrahmen alle aus Kohlefaserplatten hergestellt sind.

9. Additiv hergestellte Vorrichtung für ein Luft- und Raumfahrttragwerk nach Anspruch 1, wobei die Kupplung (9) eine elastische Kupplung ist.

## Revendications

1. Dispositif de fabrication additive pour une poutrelle aérospatiale, comprenant une unité d'entrée de matière première, une unité de formation de poutrelle longitudinale, une unité de traction de poutrelle longitudinale, une unité de formation de poutrelle transversale et une unité de support de poutrelle disposées séquentiellement, dans lequel
l'unité d'entrée des matières premières comprend un rouleau supérieur (1), un rouleau inférieur (2) situé sous le rouleau supérieur (1), plusieurs rouleaux de pression de transport (4) disposés séquentiellement de haut en bas, et une plaque de guidage ; une extrémité de chacun des rouleaux de pression de transport (4) est reliée à un moteur pas-à-pas d'alimentation ;
l'unité de formation du longeron comprend trois ensembles de moules, disposés en triangle ; chaque ensemble de moules comprend plusieurs moules (5), des tiges chauffantes (6), un tube en céramique (7) et une plaque de support (8), et est relié à la plaque de support (8) par le tube en céramique (7) ; les tiges chauffantes (6) sont montées dans les trous des moules (5) ; chaque moule (5) a une structure de moule supérieure et une structure de moule inférieure, qui forment un angle en forme de V ; l'angle en forme de V dans chaque ensemble de moules diminue progressivement de l'avant vers l'arrière ; et
l'unité de traction de la poutre longitudinale comprend un moteur pas à pas de traction (15), un accouplement (10), un arbre de transmission (9) et un cadre de support supérieur (16) ; des plaques d'aile (16-1) sont réparties sur deux côtés du cadre de support supérieur (16) ; un angle entre chaque plaque d'aile (16-1) et une plaque centrale du cadre de support supérieur (16) est de 60°, et chaque plaque d'aile (16-1) a deux trous de passage pour la fixation d'un arbre de sortie de puissance supérieur gauche et droit (17) et d'un arbre entraîné supérieur (18) qui sont agencés en parallèle ; une extrémité de l'arbre de sortie de puissance supérieur gauche (17) est disposée sur une plaque de support gauche (19) et reliée à un engrenage conique I (11) ; une extrémité de l'arbre de sortie de puissance supérieur droit (17) est disposée sur une plaque de support droite (20) et reliée à un engrenage conique II (21) ; un engrenage I (12) et une roue concave I (23) sont disposés séquentiellement sur chaque arbre supérieur de sortie de puissance (17) ; un engrenage II (24) et une roue convexe I (25) qui coopèrent avec l'engrenage I (12) et la roue concave I (23) sont disposés séquentiellement sur l'arbre supérieur entraîné (18) ; le moteur pas à pas (15) est relié à l'arbre de transmission (9) par l'intermédiaire de l'accouplement (10) ; l'arbre de transmission (9) est monté séquentiellement sur la plaque de support gauche (19) et la plaque de support droite (20) ; un pignon conique III (26) et un quatrième pignon conique (31) qui s'engrènent avec le pignon conique I (11) et le pignon conique II (21) séparément sont disposés séquentiellement sur l'arbre de transmission (9) ; un arbre entraîné inférieur (26) parallèle à l'arbre de transmission (9) est monté sur la plaque de support gauche (19) ; un engrenage III (27) et une roue convexe II (28) sont disposés séquentiellement sur l'arbre entraîné inférieur (26) ; l'engrenage III (27) et la roue convexe II (28) coopèrent avec un engrenage IV (29) et une roue concave II (30) sur l'arbre de transmission (9) séparément ; une ligne centrale de la roue convexe II (28) est coaxiale avec un centre de la plaque centrale du cadre de support supérieur (16) ; l'unité de formation de poutre transversale est composée d'un module de mouvement et d'un module d'impression ; l'unité de support de poutre triangulaire est composée de rouleaux de transport de support (50) et d'un cadre de support (51) à deux extrémités ; un rouleau de transport de support (50) est disposé à chaque extrémité du cadre de support (51) à deux extrémités ; et une forme des rouleaux de transport de support (50) correspond à une surface intérieure d'une poutre longitudinale de la poutre triangulaire.

2. Le dispositif de fabrication additive pour une poutrelle aérospatiale selon la revendication 1, dans lequel le module d'impression est disposé sur un coulisseau du module de mouvement (40) ; le module de mouvement (40) est un mécanisme de guidage linéaire à vis ; et le module d'impression comprend un ensemble d'impression (41) et une buse (42) disposée sur l'ensemble d'impression (41).

3. Le dispositif de fabrication additive pour une poutrelle aérospatiale selon la revendication 1, dans lequel trois unités de formation de poutrelles transversales sont configurées ; et les trois unités de formation de poutrelles transversales sont parallèles à trois côtés de la poutrelle et perpendiculaires aux poutres longitudinales de la poutrelle.

4. Dispositif de fabrication additive pour une poutrelle aérospatiale selon la revendication 1, dans lequel
l'écart entre la roue concave I (23) et la roue convexe I (25) est compris entre 0,2 mm et 3 mm ; et l'écart entre la roue concave II (30) et la roue convexe II (28) est compris entre 0,2 mm et 3 mm.

5. Dispositif de fabrication additive pour une poutrelle aérospatiale selon la revendication 1, dans lequel
chaque ensemble de moules comprend trois moules (5) ; et les angles en forme de V dans les ensembles de moules sont respectivement de 120°, 90° et 60°.

6. Dispositif de fabrication additive pour une poutrelle aérospatiale selon la revendication 1, dans lequel
la roue concave I (23) et la roue concave II (30) sont en retrait en forme de V à 60° ; et la roue convexe I (25) et la roue convexe II (28) sont surélevées en forme de V à 60°.

7. Dispositif de fabrication additive pour une poutrelle aérospatiale selon la revendication 1, dans lequel
des couches de caoutchouc sont disposées sur les surfaces de la roue concave I (23) et de la roue concave II (30) ; et des couches de caoutchouc sont disposées sur les surfaces de la roue convexe I (25) et de la roue convexe II (28).

8. Le dispositif de fabrication additive pour une poutrelle aérospatiale selon la revendication 1, comprenant en outre un cadre de support gauche et un cadre de support droit, dans lequel le cadre de support supérieur, le cadre de support gauche et le cadre de support droit sont tous fabriqués à partir de panneaux de fibre de carbone.

9. Le dispositif de fabrication additive pour une poutrelle aérospatiale selon la revendication 1, dans lequel l'accouplement (9) est un accouplement élastique.
